Europäisches Patentamt

European Patent Office

Office européen des brevets

(19)

(11) **EP 0 995 133 B1**

(12) **EUROPEAN PATENT SPECIFICATION**

(45) Date of publication and mention
of the grant of the patent:
**10.12.2003   Bulletin 2003/50**

(51) Int Cl.[7]: **G01V 1/36**, G01V 1/28

(21) Application number: **98934331.4**

(86) International application number:
**PCT/US98/14167**

(22) Date of filing: **08.07.1998**

(87) International publication number:
**WO 99/003004 (21.01.1999 Gazette 1999/03)**

(54) **METHOD OF DETECTING SEISMIC EVENTS AND FOR DETECTING AND CORRECTING GEOMETRY AND STATICS ERRORS IN SEISMIC DATA**

VERFAHREN ZUM MESSEN VON SEISMISCHEN EREIGNISSEN UND ZUM ERFASSEN UND KORRIGIEREN DER GEOMETRISCHEN UND STATISCHEN UNGENAUIGKEITEN IN SEISMISCHEN DATEN

PROCEDE PERMETTANT DE DETECTER DES EVENEMENTS SISMIQUES ET DE CORRIGER DES ERREURS DE GEOMETRIE ET DE MECANIQUE STATIQUES DANS DES DONNEES SISMIQUES

(84) Designated Contracting States:
**DK GB**

(30) Priority: **10.07.1997   US 891263**

(43) Date of publication of application:
**26.04.2000   Bulletin 2000/17**

(73) Proprietor: **PGS Data Processing, Inc.**
**Houston, TX 77042 (US)**

(72) Inventor: **MARTIN, Federico**
**Missouri City, TX 77459 (US)**

(74) Representative: **Skone James, Robert Edmund**
**GILL JENNINGS & EVERY**
**Broadgate House**
**7 Eldon Street**
**London EC2M 7LH (GB)**

(56) References cited:
EP-A- 0 447 249          WO-A-98/22835
US-A- 5 136 550          US-A- 5 555 218

• CHU CH -K P ET AL: "FIRST BREAK REFRACTION EVENT PICKING USING FUZZY LOGIC SYSTEMS" IEEE TRANSACTIONS ON FUZZY SYSTEMS, vol. 2, no. 4, 1 November 1994, pages 255-266, XP000469682
• RUSSELL B. ET AL.: "noise elimination and the radon transform" GEOPHYSICS: THE LEADING EDGE OF EXPLORATION, vol. 9, no. 10, 1 October 1990, pages 18-23, XP000444363
• MCMECHAN G.A. ET AL.: "analysis of dispersive waves by wave field transformation" GEOPHYSICS, vol. 46, no. 6, 1 June 1981, pages 869-874, XP002084515
• MORLET J. ET AL: "wave propagation and sampling theory-part 1: complex signal and scattering in multilayered media" GEOPHYSICS, vol. 47, no. 2, 1 February 1982, pages 203-221, XP002084516
• CHUN J.H. ET AL: "first arrival time surface, estimation of statics" OIL & GAS JOURNAL, vol. 81, no. 36, 1 September 1983, pages 162-170, XP002084517

**Description**

BACKGROUND OF THE INVENTION

This invention relates to the field of seismic data processing and specifically to methods for detecting arrival events, such as direct arrivals and refractions, and for detecting geometry and statics errors in seismic data.

In seismic prospecting, signals are generated at signal source locations by sources (e.g. air guns, dynamite, and vibrators) which travel through media, sometimes being refracted and reflected, and are received at receivers (e. g. hydrophones and geophones, a.k.a. pressure detectors and particle velocity detectors, respectively). The reflections and refractions include information from which subsurface geology is determined. However. the process of acquiring the data is susceptible to error.

For example, the amplitude of a particular shot from a particular source may not be as designed. A receiver may not be well-coupled (either to the recorder or the ground). Further problems in sources and receivers may be intermittent. As the number of sources and receivers increase, and as the volume of data increases with more and more dense 3D seismic activities. detection of such error becomes more and more difficult.

Also, it is important to know the precise location of the sources and receivers, relative to one another. Again, as data volume has increased, this has become a particularly difficult problem, especially in marine environments, including ocean bottom cable and towed streamer applications.

Even further, allowance must be made for variation in the elevation of receivers and sources, as well as variance in the depth to the sub-weathered layer, since the perceived depth of a particular event in a record is related to the time difference from the instant of the shot to the reception of the response to the shot. This is typically known as "statics" correction.

In determining actual source or receiver location, and in performing statics corrections, typically, the first energy received by the receiver (a.k.a. the "first break") is used. For example, in some cases, the first break is the "direct arrival" (a signal received from the source which has not been reflected or refracted). In other cases, the first break is a refracted signal (e.g. in some ocean bottom cable situations).

Triangulation or least squares techniques use the first break to determine the relative position of shots and receivers. In the case of statics corrections, a decomposition algorithm is used, having the following general formula:

$$\Delta t = \Delta xy + \text{shot static error} + \text{receiver static error}$$

where $\Delta xy$ is the position error of the shot and receiver, and where $\Delta t$ is derived from refractors found in the data. See, Yilmaz, *Seismic Data Processing,* V.2, Ch 3, pp. 155-240, Society of Exploration Geophysicists (Tulsa, 1987).

To determine the correct $\Delta t$ function, however, the first break must be determined. This is not a trivial task. In fact, it has proven to be very difficult.

Currently, although attempts at automatic picking of the first break have been made, the picking still requires manual work, for most jobs. This manual work includes the time-consuming visual inspection of the data, since the automated processes are highly sensitive to noise. Further. the manual work may require *a priori* knowledge of the velocity, which is not always available. Visual inspection for good quality control defeats the very purpose of an automated system. Therefore, a reliable, automated system for detecting seismic events, such as the first break, is needed.

Furthermore, techniques using first breaks can only work with a single event per time axis. And, since the first break is the direct arrival for deep water cases only, traditional methods use only a few direct arrival traces for shallow water, disregarding all other traces where the direct arrival occurs at later time than the first break. A technique in which multiple events, especially one which could distinguish between the direct arrival and differing reflections is needed to provide greater flexibility and accuracy in the geometry correction and statics correction areas.

Even further still, current geometry and statics correction processes use only first break information, making it more difficult to identify the type of error occurring. Therefore, a method is needed for detection and correction of geometry error and a method of detection and correction of statics error which the type of error is identifiable. Even further, current picking algorithms using correlation and stack/correlation techniques are subject to cycle skips, which is common, but very undesirable.

"First arrival time surface, estimation of statics", Chun J.H. et al, Oil & Gas Journal, Vol. 81, No. 36, 1 September 1983, pages 162-170, addresses the problem of obtaining surface consistent statics using first arrival refractions. This involves a method for automatically detecting substantially linear seismic events in multiple element data, wherein at least one element of the data comprises a shot and at least one other element of the data comprises a receiver, for a common element gather of traces, the method comprising: sorting the gather by a first element line, a first element, a second element line, and a second element, wherein a sorted gather of traces is defined; transforming the sorted gather of complex traces into a set of velocity stack traces; and picking events from the velocity stack trace envelopes.

"First Break Refraction Event Picking Using Fuzzy Logic Systems" by Chung-Kuang et al, IEEE Transactions on Fuzzy Systems, Vol. 2, No. 4, 1 November 1994, pages 255-266, describes applying a back-propagation fuzzy logic system (BPFLS) to first break picking. Results indicated that the BPFLS achieves about the same picking accuracy as a feedforward neural network that is also trained using a back propagation algorithm; however, the BPFLS is trained in a much shorter time, because there is a systematic way in which the initial parameters of the BPFLS can be chosen, versus the random way in which the weights of the neural network are chosen.

According to one aspect of the invention, a method is provided for automatically detecting linear seismic events in multiple element data. wherein at least one element of the data comprises a shot and at least one other element of the data comprises a receiver, for a common element gather of traces, the method comprising:

computing the complex trace envelope of traces of the gather,
sorting the gather by a first element line, a first element, a second element line, and a second element, wherein a sorted gather of traces is defined;
wherein said computing and said sorting define a sorted gather of complex trace envelopes;
transforming the sorted gather of complex trace envelopes into a set of velocity stack trace envelopes;
picking events from the velocity stack trace envelopes by detecting maxima;
determining geometry errors and/or static errors based on the picking; and
correcting said errors, wherein said transforming the sorted gather of traces into a set of velocity stack trace envelopes comprises applying a slant stack transform.

According to a second aspect of the invention, a system for automatically detecting linear seismic events in multiple element data, wherein at least one element of the data comprises a shot and at least one other element of the data comprises a receiver, for a common element gather of traces comprises
a means for computing the complex trace envelope of traces of the gather;
a means for sorting the gather by a first element line, a first element, a second element line, and a second element, wherein a sorted gather of traces is defined;
wherein said means for computing and said means for sorting define a sorted gather of complex trace envelopes;
a means for transforming the sorted gather of complex trace envelopes into a set of velocity stack trace envelopes;
a means for picking events from the velocity stack trace envelopes by detecting maxima;
a means for determining geometry errors and/or static errors based on the picking; and
a means for correcting said errors, wherein said means for transforming the sorted gather of traces into a set of velocity stack trace envelopes comprises a means for applying a slant stack transform.

Other aspects and embodiments will be apparent to a person of ordinary skill upon review of the following Brief Description of the Figures and Detailed Description of Example Embodiments of the invention.

BRIEF DESCRIPTION OF THE FIGURES

The present invention is better understood by reading the following description of nonlimitive embodiments with reference to the attached figures, which are briefly described as follows:

FIGURE 1 demonstrates a method and system for automatically detecting substantially linear seismic events and for correcting geometry and statics errors in multiple element data.
FIGURE 2 demonstrates a method and system for automatically detecting substantially linear seismic events in multiple element data.
FIGURE 3 demonstrates a method and system for correcting statics errors in a set of seismic data.
FIGURE 4 demonstrates a method and system for discriminating between statics. geometry. source and received problems.
FIGURE 5 demonstrates a method and system for correcting geometry errors in a set of seismic data.
FIGURE 6 demonstrates a method and system for automatically detecting substantially linear seismic events in multiple element data.
FIGURE 7 demonstrates a method and system for assembling.
FIGURE 8 demonstrates a method and system for correcting geometry errors in seismic data including substantially linear seismic events in multiple element data.
FIGURE 9 demonstrates a method and system for automatically correcting statics errors in seismic data including substantially linear seismic events in multiple element data.

It is to be noted, however, that the appended figures illustrate only typical embodiments of the invention, and are therefore, not to be considered a limitation of the scope of the invention, which includes other equally effective embodiments.

DETAILED DESCRIPTION OF EXAMPLE EMBODIMENTS OF THE INVENTION

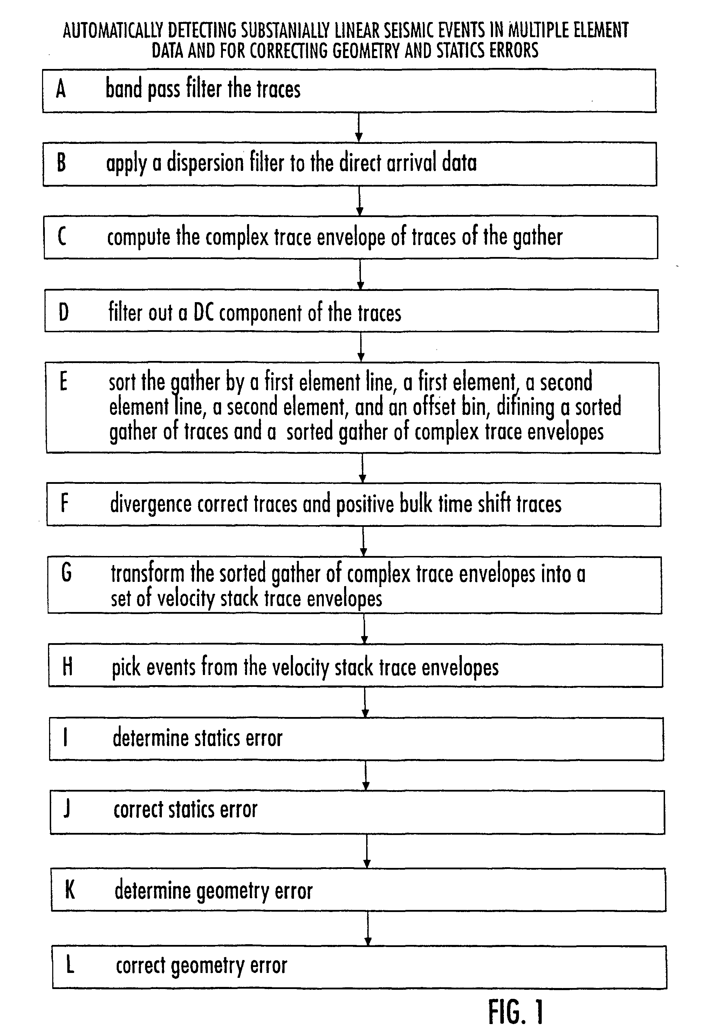

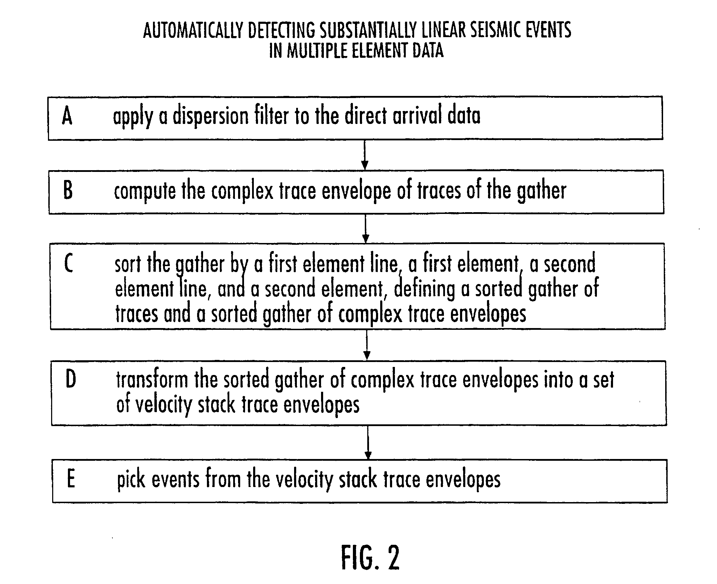

According to one aspect of the present invention, a method is provided for automatically detecting substantially linear seismic events in multiple element data. At least one element of the data comprises a shot location and at least one other element of the data comprises a receiver location. The data are gathered in a common element gather (e. g. common shot or common receiver), and the complex trace envelope of traces of the gather is computed (Figure 1C) (Figure 2A). Also. the gather is sorted by a first element line location (e.g. receiver line location, a first element location (e.g. receiver location), a second element line (e.g. a shot line location). and a second element (e.g. shot location). wherein a sorted gather of traces is defined (Figure 1E) (Figure 2C). In this example, the receiver is identified as the first element and the shot as the second element, but it will be understood that they are reversed in alternative embodiments of the invention.

After sorting the traces and computing the complex trace envelopes, a gather of sorted trace envelopes is the result (Figure 1E). The method then transforms the sorted gather of trace envelopes into a set of velocity stack trace envelopes (Figure 1G) (Figure 2C), and events are picked from the velocity stack trace envelopes (Figure 1H).

As used herein. velocity stack trace envelopes are the result of performing a tau-p transform (a.k.a. "slant stack") process on the sorted envelopes, or performing linear moveout with a single velocity (e.g. the water velocity in the case of bottom cable). The picking of the events from the velocity stack trace envelopes is then carried out by a number of processes. such as maxima detection (Figure 1H) (Figure 2D).

The above method yields as many events ("event" meaning direct arrival, first refraction. second refraction, etc.) as are picked from the velocity stack traces. And. it should be noted that the picked events will have the following information associated with them if the tau-p transform process is used: time, amplitude, and velocity.

Various additional steps are provided according to various embodiments of the invention. For example, in one embodiment, the transforming of the sorted gather of traces into a set of velocity stack trace envelopes (Figure 1G) comprises muting the direct arrival and the data in the traces after the direct arrival and applying a tau-p transform. While, according to an alternative embodiment, the transforming of the sorted gather of traces into a set of velocity stack trace envelopes comprises cluster maxima detection to detect events other than the direct arrival. Further steps include: divergence correcting the traces before the transforming (Figure 1F), band pass filtering the traces (using a source array dependent band pass filter for the detection of the direct arrival, and a band pass filter for all other events, as described in more detail below) (Figure 1A), filtering out a DC component of the traces (Figure 1D), applying a dispersion filter to the direct arrival data (Figure 1B) and positive bulk time shifting the traces before the transforming (Figure 1F).

Regarding the band pass filtering, it has been found that the use of a specific type of filter for the direct arrival is particularly useful. As used herein, that filter is called a "source array dependent band pass filter," which is a high pass filter in which the cut frequencies are derived from the source array k filter for a given event apparent velocity.

Regarding the dispersion filter. it has been found that when using traces with large shot to receiver distance (offset) the dispersive nature of the water propagated energy becomes evident. The wavelet containing the direct arrival is longer in time due to the fact that each frequency travels at a different velocity. A dispersion filter is applied to collapse the direct arrival energy to a shorter and more resolving wavelet.

According to a further embodiment of the present invention the dispersion filter used is of the type:

$$\text{Phase (frequency)} = \text{frequency} * \text{offset} / \text{velocity (frequency)}$$

Of course, using other types of dispersion filters are envisioned as well.

According to still a further embodiment of the present invention, the velocity stack traces are taken from a three dimensional survey, in which the offset bin information is preserved and used to build a cube of traces, referred to herein as a 3D velocity stack cube. plotted in, for example, shot line, shot. receiver line, receiver. offset bin. and time. Depending on which events are picked. such a cube represents the refractor structure and also the direct arrival horizon showing the geometry positions. If there are no geometry errors, the horizon will be flat. In the event there are geometry errors, the error will be seen in the cube (Figure 1K). Further more, quality control issues will be detectable from the cube in that anomalies in the horizons will show various types of errors (e.g. misfires, in which all picks will have been shifted in the same amount, or direct arrival behavior which is different from the arrival of a refraction). Therefore, the velocity stack traces are used in accordance with a further aspect of the invention to determine geometry errors (Figure 1K). While according to still a further aspect of the invention, the velocity stack traces are used to determine statics errors (Figure 1I).

According to an even further embodiment of the invention, a dispersion filter is applied to the direct arrival data (Figure 2A), a complex trace envelope of traces of the gather is computed (Figure 2B), the gather is sorted by a first element line, a first element, a second element line, and a second element, defining a sorted gather of traces and a sorted gather of complex trace envelopes (Figure 2C) and the sorted gather of complex trace envelopes is transformed into a set of velocity stack trace envelopes (Figure 2D). Events are then picked from the velocity stack trace envelopes (Figure 2E).

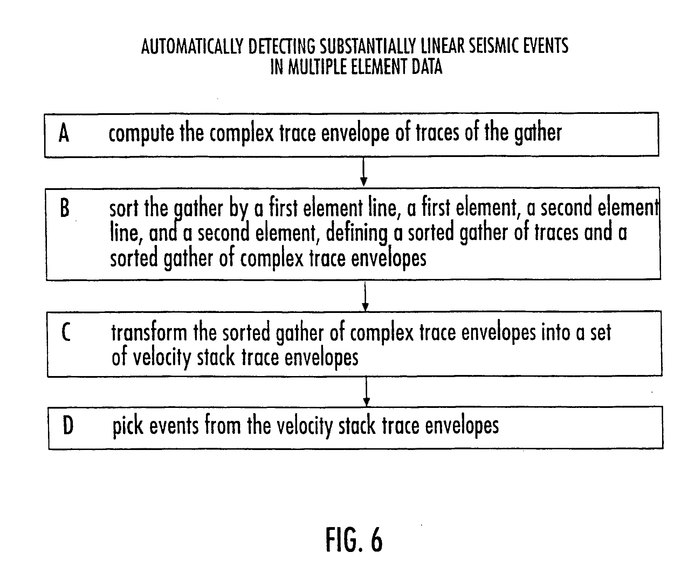

According to an even further embodiment of the invention a complex trace envelope of traces of the gather is computed (Figure 6A), the gather is sorted by a first element line, a first element, a second element line, and a second element, defining a sorted gather of traces and a sorted gather of complex trace envelopes (Figure 6B) and the sorted gather of complex trace envelopes is transformed into a set of velocity stack trace envelopes (Figure 6C), Events are then picked from the velocity stack trace envelopes (Figure 6D).

According to still a further embodiment of the invention, as explained in more detail below, events are associated with specific shot-receiver pairs, and various components of the events are analyzed (for example, by comparison to thresholds or other events) to determine geometry errors, static errors, and/or quality control (QC) (i.e., strength of source, miscalibration of receivers, etc.). In one specific example, guided correlation is used, as is traditional statics analysis.

According to more specific examples of embodiments of the present invention, reformatted land header traces are inputted, represented by $Sij(xys)$, $Rkl(xys)$, $A(X,t)$, where:

$i$=a source line index,
$j$=a source index,
$k$=a receiver line index.
$l$=a receiver index,
$xys$=x,y coordinates + water depth, and
$A(X,t)$=amplitude of the trace as a function of offset (X) and time (t).

In a source process, the following steps are followed:

Event detection process:

1) Sort by $Sij$, receiver line to build a matrix having: $\{Sij,. Rkl, A(Xt)\}$, k=constant.
2) Compute the approximate water critical distance Xc at Sij according to any process known to those of skill in the art.
3) Compute the number of bins (m) and the maximum and minimum offsets of the bins (Xmin/max) according processes known to those of skill in the art.
4) Compute the average offset within the m offset bins to define Xm.
5) Extract a time window TX for each $Sij$, $A(X,t)$, where $TX=Tmax(Vw,X)$ ,
     where Vw = water velocity and X is the offset.
6) Sort by m to build the matrix $\{Sij, Rkl, m, A(X,t)\}$.
7) Compute $Rm(x,y,s)$=average of $R1(x,y,s)$ for all traces in the offset bin m.
8) Duplicate the trace data, apply source array dependent high pass filter for the water arrival detection (one data set), apply regular band pass filter to the other data set.
9) Apply dispersion filter to the direct arrival data.
10) Compute complex trace envelope on both data sets.
11) Apply linear move out to data set one, at V=Vw and stack the m offset bin traces, $A(X,t)$ to build $\{Sij, Rmk. As (Vw,t)\}$, where Vw = water velocity=Vd=direct arrival time. Notice l=receiver index is replaced by m=offset bin index.
12) Mute the direct arrival and all data later than the direct arrival to data set two
13) Slant stack (tau-p transform) the data set two, $A(X,t)$ to build $\{Sij, m, As(Vs,t)\}$, where $As(Vs,t)$ is the slant stack amplitude for each velocity and time index, or, if traces are noisy, use diversity slant stack.
14) Find the tau-p trace $(As(Vs,t))$ with the maximum amplitude $(Asmax(t))$ within the transform. That is $Asmax(t) =MAX\{As(Vs,t)\}$, and Vsmax=velocity associated to the Asmax(t). An alternative method is by cluster center maximum detection.
15) Write $\{Sij, RXmk, Xm, Asmax(t), Vr\}$ including Vw data. Notice that Vr = Vsmax = refractor velocity and Asmax=amplitude of the velocity stack trace=amplitude of the refracted velocity=Ar.
16) Loop over m (offset bins).
17) Write $\{Sij, Rmk, Asmax(Xm,t), Vr\}$.

18) Loop over Rk (receiver line).

19) Write {Sij, Rmk, Asmax(Xm,t), Vr}.

20) Build cubes (Rmk(x,y), Asmax(t)} & {Rml(x,y), Vr).

21) Pick cubes tr(Sij, Rmk, Asmax, Vr) by correlation and td(Sij,Rmk, Assd, Vw) finding maxima. Where tr=refractor time, td=direct arrival time.

It will be understood by those of ordinary skill that the process described above is used in alternative embodiments as a receiver process, where R and S are interchanged.

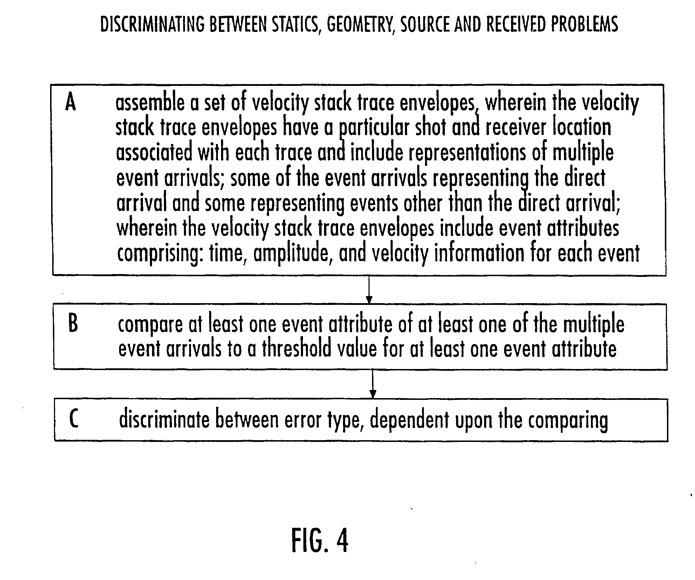

Event discrimination process: (Figure 4)

From this type of data, various information is deduced. For example, many of the parameters written above are compared to threshold values, and/or to zero, to determine if an error exists in the data (Figure 4B). In one specific embodiment, a value TTHRSH is determined as a function of Rxkl and s. The TTHRSH value is compared against td and or tr, (arrival times for the direct arrival and a refraction, respectively).

According to still a further embodiment, for QC purposes, the following matrix is calculated:

| TTHRSH | | ATHRSH | | VTHRSH |
|---|---|---|---|---|
| td Sij R11 R21 ... | trAd | Ar | Vd | Vr |

A cube is built by calculating such a matrix for all Rkl's. Errors are detected by data in the cube that fall above or below a given threshold or are zero. For example, if there is a geometry error, most of the data points in a given matrix will be bad. If there is a statics error, on the other hand, the tr value will be bad, while other values are good. Further, if there is a receiver line error, a constant error will appear for all the points on that given receiver line (e.g. amplitude = 0). Thus, according to another aspect of the invention, in a QC process, useful event attributes (as used herein, "event attributes" comprise: for example, td. tr, Ad, Ar, Vd, and Vr) are compared to threshold values and QC problems are flagged based on that comparison (Figure 4C). The type of QC error is determined from the pattern of non-conformance with the particular event attribute. In some embodiments, the error is plotted in the velocity stack cube (e.g. with a specific color designating a specific type of error) and the errors are plotted along with the xy contours. Next, all flagged Sij an Rkl trace gathers are plotted.

According to a further embodiment a method for discriminating between statics, geometry, source and received problems is provided. This method is represented by Figure 4. A set of velocity stack trace envelopes is assembled. wherein the velocity stack trace envelopes have a particular shot and receiver location associated with each trace and include representations of multiple event arrivals. (Figure 4A) Some of the event arrivals represent the direct arrival and some represent events other than the direct arrival. The velocity stack trace envelopes include event attributes comprising: time, amplitude, and velocity information for each event. At least one event attribute of at least one of the multiple event arrivals to a threshold value for at least one event attribute (Figure 4B); discriminating between error type dependant upon the comparing (Figure 4C).

According to an alternative embodiment, rather than comparing the event attributes to threshold values, the event attributes for at least one trace are compared to the event attributes of at least one other trace. Errors are assigned to variances outside a predetermined level.

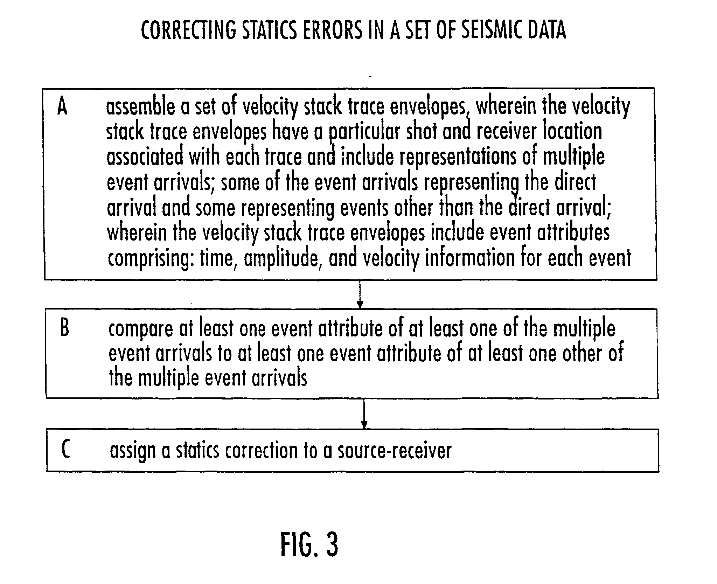

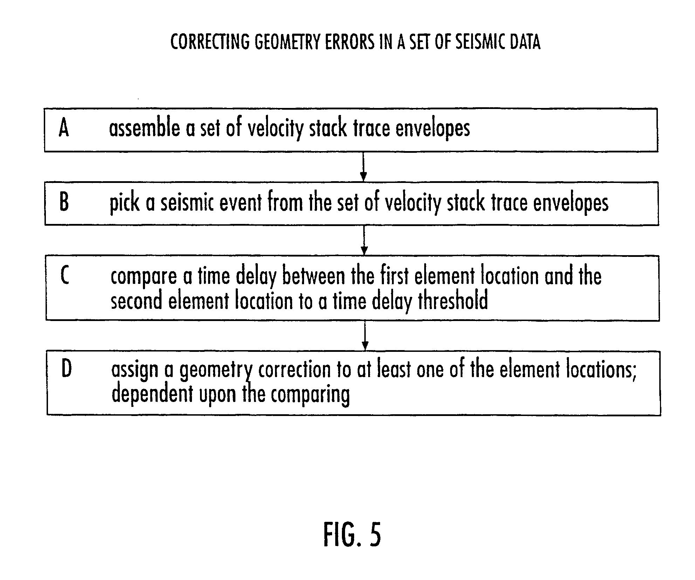

Geometry and statics corrections: (Figure 5) (Figure 3)

According to an even further aspect of the invention, after assembling a set of velocity stack envelopes (Figure 5A) and picking a seismic event from that set of velocity stack trace envelopes (Figure 5B), the time delay between the first element location and the second element location is compared to a time delay threshold (Figure 5C). A geometry correction is then assigned dependent upon the comparison (Figure 5D).

According to an even further aspect of the invention a set of velocity stack envelopes are assembled (Figure 3A); some event arrivals representing the direct arrival and some representing events other than the direct arrival. At least one event attribute of at least one of the multiple event arrivals is compared to at least one event attribute of at least one other of the multiple event arrivals (Figure 3B). A statics correction is then assigned to a source receiver (Figure 3C).

According to an even further aspect of the invention, geometry corrections are provided by running triangulation or least squares location algorithms using the direct arrival attributes td tr(Sij(xy), Rmk(xy), Ad, Vd). A recomputed receiver location Sij(x',y') is then applied.

According to an even further aspect of the invention, static corrections are provided by running conventional residual statics algorithms using the refractor arrival attributes td tr(Sij(x'y'), Rmk(xy), Ar, Vr).

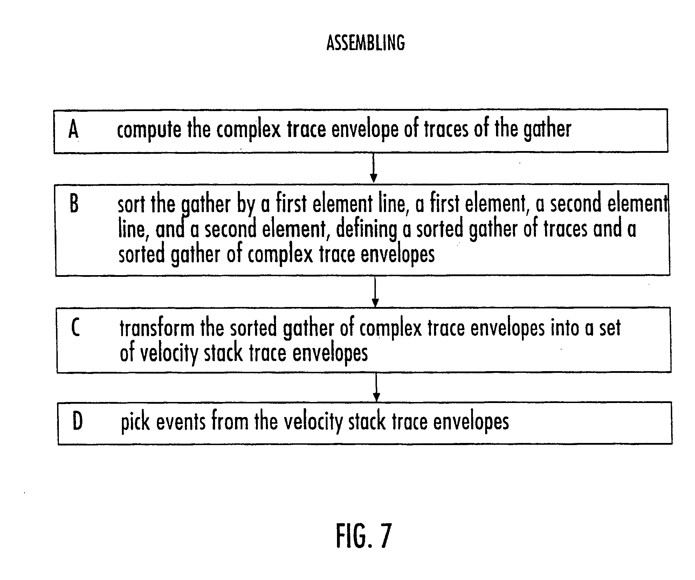

According to still an even further aspect of the invention a method for assembling, represented schematically in Figure 7, is provided. Compute the complex trace envelope of traces of a gather (Figure 7A), and sort the gather by a first element line, a first element, a second element line, and a second element (Figure 7B). A sorted gather of traces is defined. The computing and sorting define a sorted gather of complex trace envelopes. Transform the sorted gather of complex trace envelopes into a set of velocity stack trace envelopes (Figure 7C), and pick events from the velocity stack trace envelopes (Figure 7D).

According to an even further aspect of the invention a method for automatically detecting substantially linear seismic events in multiple element data, and for correcting geometry and statics errors is provided. At least one element of the data comprises a shot and at least one other element of the data comprises a receiver, for a common element gather of traces. First, band pass filter the traces (Figure 1A), compute the complex trace envelope of traces of the gather (Figure 1C), sort the gather by a first element line. a first element, a second element line, a second element, and an offset bin (Figure 1E). A sorted gather of traces is defined. The computing and sorting define a sorted gather of complex trace envelopes. Further, transform the sorted gather of complex trace envelopes into a set of velocity stack trace envelopes (Figure 1G). The traces are divergence corrected and positive bulk time shifted before transforming (Figure 1F). Pick events from the velocity stack trace envelopes (Figure 1H), determine statics error based on the picking (Figure 1I), correct the statics error (Figure 1J), determine geometry error based on the picking (Figure 1K), and correct the geometry error (Figure 1L).

According to an even further aspect of the invention a system for automatically detecting substantially linear seismic events in multiple element data is provided. This is schematically represented by Figure 1. Each block in Figure 1 represents a hardware/software module as would be known to one of ordinary skill in the art. For a common element gather of traces, at least one element of the data comprises a shot and at least one other element of the data comprises a receiver. A means for computing the complex trace envelope of traces of the gather is provided (Figure 1C). Also provided is a means for sorting the gather by a first element line. a first element, a second element line. and a second element; defining a sorted gather of traces (Figure 1E). The means for computing and the means for sorting define a sorted gather of complex trace envelopes (Figure 1E). There is also provided a means for transforming the sorted gather of complex trace envelopes into a set of velocity stack trace envelopes (Figure 1G) and for picking events from the velocity stack trace envelopes (Figure 1H).

According to an even further aspect of the invention a means for transforming the sorted gather of traces into a set of velocity stack trace envelopes provides slant stack transforming of the gather of traces and maxima detecting (Figure 1G). Also embodied in the present invention is a means for transforming the sorted gather of traces into a set of velocity stack trace envelopes providing muting the direct arrival and the data in the traces after the direct arrival and applying a tau-p transform (Figure 1G).

According to an even further aspect of the invention a means for picking is provided comprising cluster maxima detection (Figure 1H).

According to an even further aspect of the invention a means for sorting is provided for sorting the gather by offset bin (Figure 1E).

According to still an even further aspect of the invention a means for divergence correcting the traces before the transforming is provided (Figure 1F).

According to an even further aspect of the invention a means for band pass filtering the traces is provided (Figure 1A). Another nonlimitive aspect of the invention includes source array dependent band pass filtering (Figure 1A).

According to an even further aspect of the invention a means for filtering out a DC component of the traces is provided (Figure 1D).

According to still an even further aspect of the invention a means for positive bulk time shifting the traces before the transforming is provided (Figure 1F).

According to an even further aspect of the invention a means for applying a dispersion filter to the direct arrival data is provided before computing the complex trace envelope of traces of the gather (Figure 1B).

According to an even further aspect of the invention a system for correcting statics errors in a set of seismic data is provided. Schematically this is represented by Figure 3. Each block in Figure 3 schematically represents a hardware/software module as would be known by one skilled in the art. A means for assembling a set of velocity stack trace envelopes is provided (Figure 3A). Also provided is a means for comparing at least one event attribute of at least one of the multiple event arrivals to at least one event attribute of at least one other of the multiple event arrivals (Figure 3B). Further, a means for assigning a statics correction to a source-receiver is provided (Figure 3C). The statics correction is dependent upon the comparing. The velocity stack trace envelopes have a particular shot and receiver location associated with each trace and the velocity stack trace envelopes include representations of multiple event arrivals. The velocity stack trace envelopes also include event attributes comprising: time, amplitude, and velocity information for each event. Some of the event arrivals represent the direct arrival and some represent events other than the direct arrival.

According to still an even further aspect of the invention a means for assembling. This is schematically represented by each block in Figure 7. Each block in Figure 7 represents a hardware/software module as would be known to one of ordinary skill in the art. A means for computing the complex trace envelope of traces of a gather (Figure 7A) is provided, and for sorting the gather by a first element line, a first element, a second element line, and a second element (Figure 7B). A sorted gather of traces is defined. The computing and sorting define a sorted gather of complex trace envelopes. A means for transforming the sorted gather of complex trace envelopes into a set of velocity stack trace envelopes (Figure 7C), and picking events from the velocity stack trace envelopes is provided (Figure 7D).

According to an even further aspect of the invention a system for discriminating between statics, geometry, source, and received problems is provided. This is schematically represented by Figure 4. Each block in Figure 4 represents a hardware/software module as would be known to one of ordinary skill in the art. Also provided is a means for assembling a set of velocity stack trace envelopes (Figure 4A). Further provided is a means for comparing at least one event attribute of at least one of the multiple event arrivals to a threshold value for at least one event attribute (Figure 4B). Still further provided is a means for discriminating between error type, dependent upon the comparing, and a means for assembling a set of velocity stack trace envelopes (Figure 4C). The velocity stack trace envelopes have a particular shot and receiver location associated with each trace and the velocity stack trace envelopes include representations of multiple event arrivals. The velocity stack trace envelopes include event attributes comprising: time, amplitude, and velocity information for each event. Some of the event arrivals represent the direct arrival and some represent events other than the direct arrival.

According to an even further aspect of the invention a system for correcting geometry errors in a set of seismic data traces is provided. This is represented schematically by Figure 5. Each block in Figure 5 represents a hardware/software module as would be known to one of ordinary skill in the art. The traces are related to a first element location and a second element location, one of the element locations being a shot location and the other of the element locations being a receiver location. Further, a means for assembling a set of velocity stack trace envelopes including offset bin information is provided (Figure 5A). Also provided is a means for picking a seismic event from the set of velocity stack trace envelopes (Figure 5B), a means for comparing a time delay between the first element location and the second element location to a time delay threshold (Figure 5C), and a means for assigning a geometry correction to at least one of the element locations; dependent upon the comparing (Figure 5D).

According to an even further aspect of the invention a means for assembling is provided comprising assigning the traces to offset bins and applying moveout correction to the traces (Figure 5A).

According to an even further aspect of the invention a system for automatically detecting substantially linear seismic events in multiple element data is provided. This is schematically represented in Figure 2. Each block in Figure 2 represents a hardware/software module as would be known to one of ordinary skill in the art. For a common gather of traces at least one element of the data comprises a shot and at least one other element of the data comprises a receiver. Also provided is a means for band pass filtering the traces. computing the complex trace envelope of traces of the gather (Figure 2A), filtering out a DC component of the traces and sorting the gather by a first element line, a first element, a second element line, a second element, and an offset bin. A sorted gather of traces is defined and computing and sorting define a sorted gather of complex trace envelopes (Figure 2B). Further provided is a means for transforming the sorted gather of complex trace envelopes into a set of velocity stack trace envelopes (Figure 2C). The traces are divergence corrected and positive bulk time shifted before transforming. Also provided is a means for picking events from the velocity stack trace envelopes (Figure 2D).

According to still an even further aspect of the invention a means for applying a dispersion filter to the direct arrival data before said computing the complex trace envelope of traces of the gather is provided (Figure 1B).

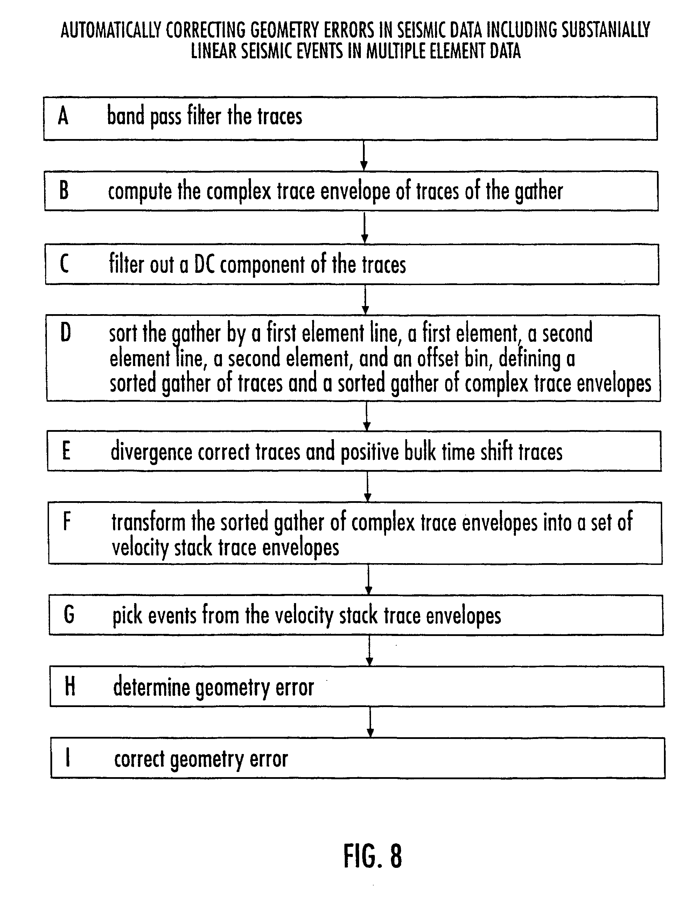

According to an even further aspect of the invention a system for automatically correcting geometry errors in seismic data including substantially linear seismic events in multiple element data is provided. This is represented schematically by Figure 8. Each block in Figure 8 represents a hardware/software module as would be known to one of ordinary skill in the art. At least one element of the data comprises a shot and at least one other element of the data comprises a receiver, for a common element gather of traces. Also provided is a means for band pass filtering the trace (Figure 8A), computing the complex trace envelope of traces of the gather (Figure 8B), filtering out a DC component of the traces (Figure 8C), sorting the gather by a first element line, a first element, a second element line, a second element, and an offset bin (Figure 8D). A sorted gather of traces is defined. The computing and sorting define a sorted gather of complex trace envelopes. Further provided is a means for transforming the sorted gather of complex trace envelopes into a set of velocity stack trace envelopes (Figure 8F). The traces are divergence corrected and positive bulk time shifted before transforming (Figure 8E). Also provided is a means for picking events from the velocity stack trace envelopes (Figure 8G), determining geometry error based on the picking (Figure 8H) and correcting the geometry error (Figure 8I).

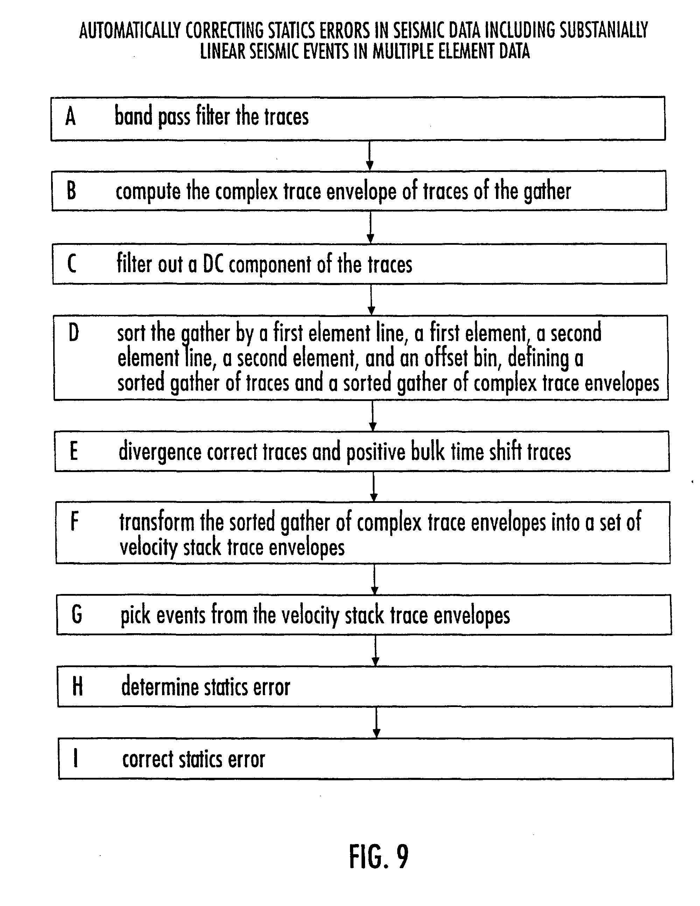

According to an even further aspect of the invention a system for automatically correcting statics errors in seismic data including substantially linear seismic events in multiple element data is provided. This is schematically represented by Figure 9. Each block in Figure 9 represents a hardware/software module as would be known to one of ordinary skill in the art. At least one element of the data comprises a shot and at least one other element of the data comprises a receiver, for a common element gather of traces. Also provided is a means for band pass filtering the traces (Figure 9A), computing the complex trace envelope of traces of the gather (Figure 9B), filtering out a DC component of the traces (Figure 9C). sorting the gather by a first element line. a first element, a second element line, a second element (Figure 9D). A sorted gather of traces is defined. The computing and sorting define a sorted gather of complex trace envelopes. Further provided is a means for transforming the sorted gather of complex trace envelopes into a set of velocity stack trace envelopes (Figure 9F). The traces are divergence corrected and positive bulk time shifted before the transforming (Figure 9E). Also provided is a means for picking events from the velocity stack trace envelopes (Figure 9G), determining statics error based on the picking (Figure 1H) and correcting the statics error (Figure 9I).

According to an even further aspect of the invention a system for automatically detecting substantially linear seismic events in multiple element data, and for correcting geometry and statics errors is provided. This is schematically represented by Figure 1. Each block in Figure 1 represents a hardware/software module as would be known to one of ordinary skill in the art. At least one element of the data comprises a shot and at least one other element of the data comprises a receiver, for a common element gather of traces. Also provided is a means for band pass filtering the traces (Figure 1A), computing the complex trace envelope of traces of the gather (Figure 1C), sorting the gather by a first element line, a first element, a second element line, a second element, and an offset bin (Figure 1E). A sorted gather of traces is defined. The computing and sorting define a sorted gather of complex trace envelopes. Further provided is a means for transforming the sorted gather of complex trace envelopes into a set of velocity stack trace envelopes (Figure 1G). The said traces are divergence corrected and positive bulk time shifted before transforming (Figure 1F). Also provided is a means for picking events from the velocity stack trace envelopes (Figure 1H), determining statics error based on the picking (Figure 1I), correcting the statics error (Figure 1J), determining geometry error based on the picking (Figure 1K), and correcting the geometry error (Figure 1L).

According to still an even further aspect of the invention a means for applying a dispersion filter to the direct arrival data before said computing the complex trace envelope of traces of the gather is provided (Figure 1B).

## Claims

1.  A method for automatically detecting linear seismic events in multiple element data, wherein at least one element of the data comprises a shot and at least one other element of the data comprises a receiver, for a common element gather of traces, the method comprising:

    computing (C) the complex trace envelope of traces of the gather;
    sorting (E) the gather by a first element line, a first element, a second element line, and a second element, wherein a sorted gather of traces is defined;
    wherein said computing and said sorting define a sorted gather of complex trace envelopes;
    transforming (G) the sorted gather of complex trace envelopes into a set of velocity stack trace envelopes;
    picking (H) events from the velocity stack trace envelopes by detecting maxima;
    determining ( I , K) geometry errors and/or static errors based on the picking; and
    correcting (J,L) said errors, wherein said transforming the sorted gather of traces into a set of velocity stack trace envelopes comprises applying a slant stack transform.

2.  A method as in claim 1, wherein said transforming (G) the sorted gather of traces into a set of velocity stack trace envelopes comprises:

    slant stack transforming of the gather of traces and
    detecting the peak signal characteristics of the slant stack transformed gather of traces.

3.  A method as in claim 1 or claim 2, wherein said transforming (G) the sorted gather of traces into a set of velocity stack trace envelopes comprises muting the direct arrival and the data in the traces after the direct arrival and applying the slant stack transform.

**4.** A method as in any of the preceding claims, wherein said picking (H) comprises cluster maxima detection.

**5.** A method as in any of the preceding claims, wherein said sorting (E) further comprises sorting the gather by offset bin.

**6.** A method as in any of the preceding claims, further comprising divergence correcting (F) the traces before said transforming (G).

**7.** A method as in any of the preceding claims, further comprising band pass filtering the traces.

**8.** A method as in claim 7, wherein said band pass filtering comprises source array dependent band pass filtering.

**9.** A method as in any of the preceding claims, further comprising filtering out a DC component of the traces.

**10.** A method as in any of the preceding claims, further comprising positive bulk time shifting (F) the traces before said transforming.

**11.** A method as in any of the preceding claims, further comprising applying a dispersion filter to the direct arrival data before said computing the complex trace envelope of traces of the gather.

**12.** A method as in claim 1, wherein said transforming the sorted gather of traces into a set of velocity stack trace envelopes comprises muting the direct arrival and the data in the traces after the direct arrival and applying a slant stack transform.

**13.** A system for automatically detecting linear seismic events in multiple element data, wherein at least one element of the data comprises a shot and at least one other element of the data comprises a receiver, for a common element gather of traces, said system comprising:

a means for computing (C) the complex trace envelope of traces of the gather;
a means for sorting (E) the gather by a first element line, a first element, a second element line, and a second element, wherein a sorted gather of traces is defined;
wherein said means for computing and said means for sorting define a sorted gather of complex trace envelopes;
a means for transforming (G) the sorted gather of complex trace envelopes into a set of velocity stack trace envelopes;
a means for picking (H) events from the velocity stack trace envelopes by detecting maxima;
a means for determining (I,K) geometry errors and/or static errors based on the picking; and
a means for correcting (J, L) said errors, wherein said means for transforming (G) the sorted gather of traces into a set of velocity stack trace envelopes comprises a means for applying a slant stack transform.

**14.** A system as in claim 13, wherein said means for transforming (G) the sorted gather of traces into a set of velocity stack trace envelopes comprises:

a means for slant stack transforming of the gather of traces and
a means for detecting peak signal characteristics of the slant stack transformed gather of traces.

**15.** A system as in claim 13, wherein said means for transforming (G) the sorted gather of traces into a set of velocity stack trace envelopes comprises a means for muting the direct arrival and the data in the traces after the direct arrival and applying the slant stack transform.

**16.** A system as in any of claims 13 to 15, wherein said means for picking (H) comprises cluster maxima detection.

**17.** A system as in any of claims 13 to 16, wherein said means for sorting (E) further comprises a means for sorting the gather by offset bin.

**18.** A system as in any of claims 13 to 17, further comprising a means for divergence correcting the traces before said means for transforming.

**19.** A system as in any of claims 13 to 18, further comprising a means for band pass filtering the traces.

**20.** A system as in claim 19, wherein said means for band pass filtering comprises source array dependent band pass filtering.

**21.** A system as in any of claims 13 to 20, further comprising a means for filtering out a DC component of the traces.

**22.** A system as in any of claims 13 to 21, further comprising a means for positive bulk time shifting (F) the traces before said means for transforming.

**23.** A system as in any of claims 13 to 22, further comprising a means for applying a dispersion filter to the direct arrival data before said means for computing the complex trace envelope of traces of the gather.

**24.** A system as in any of claims 13 to 23, wherein said means for transforming the sorted gather of traces into a set of velocity stack trace envelopes comprises a means for muting the direct arrival and the data in the traces after the direct arrival and applying a slant stack transform.

**Patentansprüche**

**1.** Verfahren zum automatischen Erfassen linearer seismischer Ereignisse in mehrelementigen Daten, wobei mindestens ein Element der Daten einen Schuss und mindestens ein anderes Element der Daten einen Empfänger für eine gemeinsame Elemente aufweisende Spurfamilie umfasst, wobei das Verfahren folgendes umfasst:

Berechnen (C) der Einhüllenden der komplexwertigen seismischen Spuren der Spurfamilie;
Umsortieren (E) der Familie nach einer ersten Elementlinie, einem ersten Element, einer zweiten Elementlinie und einem zweiten Element, wodurch eine umsortierte Spurfamilie definiert wird;
wobei das Berechnen und Umsortieren eine umsortierte Familie von Einhüllenden komplexwertiger Spuren definieren;
Transformieren (G) der umsortierten Familie von Einhüllenden komplexwertiger Spuren in einen Satz von Einhüllenden von Geschwindigkeitsstapelungsspuren;
Picken (H) von Ereignissen aus den Einhüllenden von Geschwindigkeitsstapelungsspuren durch Erfassen von Maxima;
Bestimmen (I, K) von Geometriefehlern und statischen Fehlern auf der Basis des Pickens und
Korrigieren (J, L) der Fehler, wobei das Transformieren der umsortierten Spurfamilie in einen Satz von Einhüllenden von Geschwindigkeitsstapelungsspuren das Anwenden einer Slant-Stack-Transformation umfasst.

**2.** Verfahren nach Anspruch 1, wobei das Transformieren (G) der umsortierten Spurfamilie in einen Satz von Einhüllenden von Geschwindigkeitsstapelungsspuren folgendes umfasst:

Slant-Stack-Transformieren der Spurfamilie und
Erfassen der Spitzensignalcharakteristik der Slant-Stack-transformierten Spurfamilie.

**3.** Verfahren nach Anspruch 1 oder 2, wobei das Transformieren (G) der umsortierten Spurfamilie in einen Satz von Einhüllenden von Geschwindigkeitsstapelungsspuren das Eliminieren des Einsatzes der direkten Wellen und der Daten in den Spuren nach den direkten Wellen und das Anwenden der Slant-Stack-Transformation umfasst.

**4.** Verfahren nach einem der vorhergehenden Ansprüche, wobei das Picken (H) die Clustermaxima-Erfassung umfasst.

**5.** Verfahren nach einem der vorhergehenden Ansprüche, wobei das Umsortieren (E) weiterhin das Umsortieren der Spurfamilie nach diskreten Schuss-Empfänger-Distanzen umfasst.

**6.** Verfahren nach einem der vorhergehenden Ansprüche, weiterhin mit der Divergenzkorrektur (F) der Spuren vor der Transformation (G).

**7.** Verfahren nach einem der vorhergehenden Ansprüche, weiterhin mit der Bandpassfilterung der Spuren.

**8.** Verfahren nach Anspruch 7, wobei die Bandpassfilterung die von der Quellenanordnung abhängige Bandpassfilterung umfasst.

**9.** Verfahren nach einem der vorhergehenden Ansprüche, weiterhin mit dem Herausfiltern eines Gleichanteils der Spuren.

**10.** Verfahren nach einem der vorhergehenden Ansprüche, weiterhin mit einer Gruppenzeitkorrektur (F) der Spuren vor der Transformation.

**11.** Verfahren nach einem der vorhergehenden Ansprüche, weiterhin mit der Anwendung eines Dispersionsfilters auf die Daten der direkten Wellen vor dem Berechnen der Einhüllenden der komplexwertigen seismischen Spuren der Spurfamilie.

**12.** Verfahren nach Anspruch 1, wobei das Transformieren der umsortierten Spurfamilie in einen Satz von Einhüllenden von Geschwindigkeitsstapelungsspuren das Eliminieren des Einsatzes der direkten Wellen und der Daten in den Spuren nach den direkten Wellen und die Anwendung einer Slant-Stack-Transformation umfasst.

**13.** System zum automatischen Erfassen linearer seismischer Ereignisse in mehrelementigen Daten, wobei mindestens ein Element der Daten einen Schuss und mindestens ein anderes Element der Daten einen Empfänger für eine gemeinsame Elemente aufweisende Spurfamilie umfasst, wobei das System folgendes umfasst:

ein Mittel zum Berechnen (C) der Einhüllenden der komplexwertigen seismischen Spuren der Spurfamilie;
ein Mittel zum Umsortieren (E) der Familie nach einer ersten Elementlinie, einem ersten Element, einer zweiten Elementlinie und einem zweiten Element, wodurch eine umsortierte Spurfamilie definiert wird;
wobei das Mittel zum Berechnen und das Mittel zum Umsortieren eine umsortierte Familie von Einhüllenden komplexwertiger Spuren definieren;
ein Mittel zum Transformieren (G) der umsortierten Familie von Einhüllenden komplexwertiger Spuren in einen Satz von Einhüllenden von Geschwindigkeitsstapelungsspuren;
ein Mittel zum Picken (H) von Ereignissen aus der Einhüllenden von Geschwindigkeitsstapelungsspuren durch Erfassen von Maxima;
ein Mittel zum Bestimmen (I, K) von Geometriefehlern und statischen Fehlern auf der Basis des Pickens und ein Mittel zum Korrigieren (J, L) der Fehler, wobei das Mittel zum Transformieren (G) der umsortierten Spurfamilie in einen Satz von Einhüllenden von Geschwindigkeitsstapelungsspuren ein Mittel zum Anwenden einer Slant-Stack-Transformation umfasst.

**14.** System nach Anspruch 13, wobei das Mittel zum Transformieren (G) der umsortierten Spurfamilie in einen Satz von Einhüllenden von Geschwindigkeitsstapelungsspuren folgendes umfasst:

ein Mittel für das Slant-Stack-Transformieren der Spurfamilie und
ein Mittel zum Erfassen der Spitzensignalcharakteristik der Slant-Stack-transformierten Spurfamilie.

**15.** System nach Anspruch 13, wobei das Mittel zum Transformieren (G) der umsortierten Spurfamilie in einen Satz von Einhüllenden von Geschwindigkeitsstapelungsspuren ein Mittel zum Eliminieren des Einsatzes der direkten Wellen und der Daten in den Spuren nach den direkten Wellen und Anwenden der Slant-Stack-Transformation umfasst.

**16.** System nach einem der Ansprüche 13 bis 15, wobei das Mittel zum Picken (H) die Clustermaxima-Erfassung umfasst.

**17.** System nach einem der Ansprüche 13 bis 16, wobei das Mittel zum Umsortieren (E) weiterhin ein Mittel zum Umsortieren der Spurfamilie nach diskreten Schuss-Empfänger-Distanzen umfasst.

**18.** System nach einem der Ansprüche 13 bis 17, weiterhin mit einem Mittel zur Divergenzkorrektur der Spuren vor dem Mittel zur Transformation.

**19.** System nach einem der Ansprüche 13 bis 18, weiterhin mit einem Mittel zur Bandpassfilterung der Spuren.

**20.** System nach Anspruch 19, wobei das Mittel zur Bandpassfilterung die von der Quellenanordnung abhängige Bandpassfilterung umfasst.

**21.** System nach einem der Ansprüche 13 bis 20, weiterhin mit einem Mittel zum Herausfiltern eines Gleichanteils der Spuren.

**22.** System nach einem der Ansprüche 13 bis 21, weiterhin mit einem Mittel zur Gruppenzeitkorrektur (F) der Spuren vor dem Mittel zur Transformation.

**23.** System nach einem der Ansprüche 13 bis 22, weiterhin mit einem Mittel zur Anwendung eines Dispersionsfilters auf die Daten der direkten Wellen vor dem Mittel zum Berechnen der Einhüllenden der komplexwertigen seismischen Spuren der Spurfamilie.

**24.** System nach einem der Ansprüche 13 bis 23, wobei das Mittel zum Transformieren der umsortierten Spurfamilie in einen Satz von Einhüllenden von Geschwindigkeitsstapelungsspuren ein Mittel zum Eliminieren des Einsatzes der direkten Wellen und der Daten in den Spuren nach den direkten Wellen und Anwenden einer Slant-Stack-Transformation umfasst.

## Revendications

**1.** Procédé pour détecter automatiquement des événements sismiques linéaires dans des données à éléments multiples, dans lequel au moins un élément des données comprend un tir, et au moins un autre élément des données comprend un récepteur, pour un regroupement de traces dans un élément commun, le procédé comprenant :

un calcul (C) de l'enveloppe des traces complexes de traces du regroupement ;
un classement (E) du regroupement par une première ligne d'éléments, un premier élément, une seconde ligne d'éléments, et un second élément, dans lequel un regroupement classé des traces est défini ;
dans lequel ledit calcul et ledit classement définissent un regroupement classé d'enveloppes de traces complexes ;
une transformation (G) du regroupement classé d'enveloppes de traces complexes en un jeu d'enveloppes de traces à empilage de vitesse ;
un prélèvement (H) des événements à partir des enveloppes de traces à empilage de vitesse par détection des maxima ;
une détermination (I,K) des erreurs de géométrie et/ou des erreurs statiques sur base du prélèvement ; et
une correction (J,L) desdites erreurs, dans laquelle ladite transformation du regroupement classé des traces en un jeu d'enveloppes de traces à empilage de vitesse comprend l'application d'une transformation à empilage oblique.

**2.** Procédé tel que dans la revendication 1, dans lequel ladite transformation (G) du regroupement classé de traces en un jeu d'enveloppes de traces à empilage de vitesse comprend :

une transformation à l'empilage oblique du regroupement de traces et
une détection des caractéristiques du signal de crête du regroupement des traces transformé par l'empilage oblique.

**3.** Procédé tel que dans la revendication 1 ou la revendication 2, dans lequel ladite transformation (G) du regroupement classé des traces en un jeu d'enveloppes de traces à empilage de vitesse comprend une atténuation de l'arrivée directe et des données contenues dans les traces après l'arrivée directe, et une application de la transformation à empilage oblique.

**4.** Procédé tel que dans l'une quelconque des revendications précédentes, dans lequel ledit prélèvement (H) comprend une détection des maxima de groupes.

**5.** Procédé tel que dans l'une quelconque des revendications précédentes, dans lequel ledit classement (E) comprend en outre le classement du regroupement par fichier à décalage.

**6.** Procédé tel que dans l'une quelconque des revendications précédentes, comprenant en outre une correction (F) de divergence des traces avant ladite transformation (G).

**7.** Procédé tel que dans l'une quelconque des revendications précédentes, comprenant en outre un filtrage des traces par bande passante.

**8.** Procédé tel que dans la revendication 7, dans lequel ledit filtrage par bande passante comprend un filtrage par bande passante dépendant d'une matrice de source.

**9.** Procédé tel que dans l'une quelconque des revendications précédentes, comprenant en outre l'extraction par filtrage d'une composante à courant continu des traces.

**10.** Procédé tel que dans l'une quelconque des revendications précédentes, comprenant en outre un décalage (F) de temps positif en bloc des traces avant ladite transformation.

**11.** Procédé tel que dans l'une quelconque des revendications précédentes, comprenant en outre l'application d'un filtre de dispersion aux données d'arrivée directe avant ledit calcul de l'enveloppe de traces complexe des traces du regroupement.

**12.** Procédé tel que dans la revendication 1, dans lequel ladite transformation du regroupement classé des traces en un jeu d'enveloppes de traces à empilage de vitesse comprend une atténuation de l'arrivée directe et des données contenues dans les traces après l'arrivée directe, et l'application d'une transformation à empilage oblique.

**13.** Système pour détecter automatiquement des événements sismiques linéaires dans des données à éléments multiples, dans lequel au moins un élément des données comprend un tir et au moins un autre élément des données comprend un récepteur, pour un regroupement de traces dans un élément commun, ledit système comprenant :

un moyen de calcul (C) de l'enveloppe des traces complexes des traces du regroupement ;
un moyen de classement (E) du regroupement par une première ligne d'éléments, un premier élément, une seconde ligne d'éléments, et un second élément, dans lequel un regroupement classé de traces est défini ;
dans lequel ledit moyen de calcul et ledit moyen de classement définissent un regroupement classé d'enveloppes de traces complexes ;
un moyen de transformation (G) du regroupement classé d'enveloppes de traces complexes en un jeu d'enveloppes de traces à empilage de vitesse ;
un moyen de prélèvement (H) des événements à partir des enveloppes de traces à empilage de vitesse par détection des maxima ;
un moyen de détermination (I,K) des erreurs de géométrie et/ou des erreurs statiques sur base du prélèvement ; et
un moyen de correction (J,L) desdites erreurs, dans lequel ledit moyen de transformation (G) du regroupement classé des traces en un jeu d'enveloppes de traces à empilage de vitesse comprend un moyen d'application d'une transformation à empilage oblique.

**14.** Système tel que dans la revendication 13, dans lequel ledit moyen de transformation (G) du regroupement classé des traces en un jeu d'enveloppes de trace d'empilage de vitesse comprend :

un moyen de transformation à empilage oblique du regroupement de traces et
un moyen de détection des caractéristiques du signal de crête du regroupement des traces transformé par l'empilage oblique.

**15.** Système tel que dans la revendication 13, dans lequel ledit moyen de transformation (G) du regroupement classé des traces en un jeu d'enveloppes de traces à empilage de vitesse comprend un moyen d'atténuation de l'arrivée directe et des données contenues dans les traces après l'arrivée directe, et d'application de la transformation à empilage oblique.

**16.** Système tel que dans l'une quelconque des revendications 13 à 15, dans lequel ledit moyen de prélèvement (H) comprend une détection des maxima de groupes.

**17.** Système tel que dans l'une quelconque des revendications 13 à 16, dans lequel ledit moyen de classement (E) comprend en outre un moyen de classement du regroupement par fichier à décalage.

**18.** Système tel que dans l'une quelconque des revendications 13 à 17, comprenant en outre un moyen de correction de divergence des traces avant ledit moyen de transformation.

19. Système tel que dans l'une quelconque des revendications 13 à 18, comprenant en outre un moyen de filtrage des traces par bande passante.

20. Système tel que dans la revendication 19, dans lequel ledit moyen de filtrage par bande passante comprend un filtrage par bande passante dépendant d'une matrice de source.

21. Système tel que dans l'une quelconque des revendications 13 à 20, comprenant en outre un moyen d'extraction par filtrage d'une composante à courant continu des traces.

22. Système tel que dans l'une quelconque des revendications 13 à 21, comprenant en outre un moyen de décalage (F) de temps positif en bloc des traces avant ledit moyen de transformation.

23. Système tel que dans l'une quelconque des revendications 13 à 22, comprenant en outre un moyen d'application d'un filtre de dispersion aux données d'arrivée directe avant ledit moyen de calcul de l'enveloppe de traces complexe des traces du regroupement.

24. Système tel que dans l'une quelconque des revendications 13 à 23, dans lequel ledit moyen de transformation du regroupement classé des traces en un jeu d'enveloppes de traces à empilage de vitesse comprend un moyen d'atténuation de l'arrivée directe et des données contenues dans les traces après l'arrivée directe, et d'application d'une transformation à empilage oblique.

AUTOMATICALLY DETECTING SUBSTANIALLY LINEAR SEISMIC EVENTS IN MULTIPLE ELEMENT
DATA AND FOR CORRECTING GEOMETRY AND STATICS ERRORS

| A | band pass filter the traces |
|---|---|

| B | apply a dispersion filter to the direct arrival data |
|---|---|

| C | compute the complex trace envelope of traces of the gather |
|---|---|

| D | filter out a DC component of the traces |
|---|---|

| E | sort the gather by a first element line, a first element, a second element line, a second element, and an offset bin, difining a sorted gather of traces and a  sorted gather of complex trace envelopes |
|---|---|

| F | divergence correct traces and positive bulk time shift traces |
|---|---|

| G | transform the sorted gather of complex trace envelopes into a set of velocity stack trace envelopes |
|---|---|

| H | pick events from the velocity stack trace envelopes |
|---|---|

| I | determine statics error |
|---|---|

| J | correct statics error |
|---|---|

| K | determine geometry error |
|---|---|

| L | correct geometry error |
|---|---|

FIG. 1

AUTOMATICALLY DETECTING SUBSTANTIALLY LINEAR SEISMIC EVENTS
IN MULTIPLE ELEMENT DATA

| A | apply a dispersion filter to the direct arrival data |
|---|---|
| B | compute the complex trace envelope of traces of the gather |
| C | sort the gather by a first element line, a first element, a second element line, and a second element, defining a sorted gather of traces and a sorted gather of complex trace envelopes |
| D | transform the sorted gather of complex trace envelopes into a set of velocity stack trace envelopes |
| E | pick events from the velocity stack trace envelopes |

FIG. 2

## CORRECTING STATICS ERRORS IN A SET OF SEISMIC DATA

| A | assemble a set of velocity stack trace envelopes, wherein the velocity stack trace envelopes have a particular shot and receiver location associated with each trace and include representations of multiple event arrivals; some of the event arrivals representing the direct arrival and some representing events other than the direct arrival; wherein the velocity stack trace envelopes include event attributes comprising: time, amplitude, and velocity information for each event |
|---|---|
| B | compare at least one event attribute of at least one of the multiple event arrivals to at least one event attribute of at least one other of the multiple event arrivals |
| C | assign a statics correction to a source-receiver |

## FIG. 3

DISCRIMINATING BETWEEN STATICS, GEOMETRY, SOURCE AND RECEIVED PROBLEMS

| A | assemble a set of velocity stack trace envelopes, wherein the velocity stack trace envelopes have a particular shot and receiver location associated with each trace and include representations of multiple event arrivals; some of the event arrivals representing the direct arrival and some representing events other than the direct arrival; wherein the velocity stack trace envelopes include event attributes comprising: time, amplitude, and velocity information for each event |
| --- | --- |
| B | compare at least one event attribute of at least one of the multiple event arrivals to a threshold value for at least one event attribute |
| C | discriminate between error type, dependent upon the comparing |

FIG. 4

CORRECTING GEOMETRY ERRORS IN A SET OF SEISMIC DATA

| A | assemble a set of velocity stack trace envelopes |
|---|---|

| B | pick a seismic event from the set of velocity stack trace envelopes |
|---|---|

| C | compare a time delay between the first element location and the second element location to a time delay threshold |
|---|---|

| D | assign a geometry correction to at least one of the element locations; dependent upon the comparing |
|---|---|

# FIG. 5

AUTOMATICALLY DETECTING SUBSTANTIALLY LINEAR SEISMIC EVENTS
IN MULTIPLE ELEMENT DATA

| A | compute the complex trace envelope of traces of the gather |

| B | sort the gather by a first element line, a first element, a second element line, and a second element, defining a sorted gather of traces and a sorted gather of complex trace envelopes |

| C | transform the sorted gather of complex trace envelopes into a set of velocity stack trace envelopes |

| D | pick events from the velocity stack trace envelopes |

FIG. 6

ASSEMBLING

| A | compute the complex trace envelope of traces of the gather |
|---|---|

| B | sort the gather by a first element line, a first element, a second element line, and a second element, defining a sorted gather of traces and a sorted gather of complex trace envelopes |
|---|---|

| C | transform the sorted gather of complex trace envelopes into a set of velocity stack trace envelopes |
|---|---|

| D | pick events from the velocity stack trace envelopes |
|---|---|

# FIG. 7

AUTOMATICALLY CORRECTING GEOMETRY ERRORS IN SEISMIC DATA INCLUDING SUBSTANIALLY
LINEAR SEISMIC EVENTS IN MULTIPLE ELEMENT DATA

| A | band pass filter the traces |
|---|---|

| B | compute the complex trace envelope of traces of the gather |
|---|---|

| C | filter out a DC component of the traces |
|---|---|

| D | sort the gather by a first element line, a first element, a second element line, a second element, and an offset bin, defining a sorted gather of traces and a sorted gather of complex trace envelopes |
|---|---|

| E | divergence correct traces and positive bulk time shift traces |
|---|---|

| F | transform the sorted gather of complex trace envelopes into a set of velocity stack trace envelopes |
|---|---|

| G | pick events from the velocity stack trace envelopes |
|---|---|

| H | determine geometry error |
|---|---|

| I | correct geometry error |
|---|---|

# FIG. 8

AUTOMATICALLY CORRECTING STATICS ERRORS IN SEISMIC DATA INCLUDING SUBSTANIALLY
LINEAR SEISMIC EVENTS IN MULTIPLE ELEMENT DATA

| A | band pass filter the traces |

| B | compute the complex trace envelope of traces of the gather |

| C | filter out a DC component of the traces |

| D | sort the gather by a first element line, a first element, a second element line, a second element, and an offset bin, defining a sorted gather of traces and a sorted gather of complex trace envelopes |

| E | divergence correct traces and positive bulk time shift traces |

| F | transform the sorted gather of complex trace envelopes into a set of velocity stack trace envelopes |

| G | pick events from the velocity stack trace envelopes |

| H | determine statics error |

| I | correct statics error |

FIG. 9